# EUROPÄISCHE PATENTSCHRIFT

(11) **EP 1 472 967 B1**
(45) Veröffentlichungstag und Bekanntmachung des Hinweises auf die Patenterteilung: **13.08.2008**
(21) Anmeldenummer: 04005506.3
(22) Anmeldetag: 08.03.2004
(51) Int. Cl.: A47L 15/42, D06F 39/00, D06F 39/06

(54) **Einrichtung mit einem Trübungssensor für eine Geschirrspülmaschine oder Waschmaschine**
Device with a turbidity sensor for a dishwasher or a washing machine
Dispositif avec un capteur de turbidité pour un lave-vaisselle ou une machine à laver

(30) Priorität: 29.04.2003 DE 10319467
(43) Veröffentlichungstag der Anmeldung: 03.11.2004
(73) Patentinhaber: Miele & Cie. KG, 33332 Gütersloh (DE)
(72) Erfinder: Berends, Erik, 33611 Bielefeld (DE); Bertram, Andre, 33739 Bielefeld (DE); Reilmann, Michael, 33613 Bielefeld (DE)

(56) Entgegenhaltungen:
- EP-A- 1 092 384
- EP-A2- 1 208 790
- DE-C1- 10 146 641
- GB-A- 1 469 189

## Beschreibung

Die Erfindung betrifft eine Einrichtung zur Verhinderung einer Schaum- oder Luftblasenansammlung in der Messzone eines im Spülwasserkreislauf einer Geschirrspülmaschine oder Waschmaschine angeordneten Trübungssensors, mit einer Hauptströmungsleitung und einer daran angeschlossenen Bypassleitung, welche einen von der Hauptströmungsleitung abzweigenden ersten Leitungsabschnitt, einen in die Hauptströmungsleitung zurückmündenden zweiten Leitungsabschnitt und einen aufgeweiteten strömungsberuhigten Bereich vor der Einmündung als Messzone für den Trübungssensor aufweist.

Bei modernen wasserführenden Haushaltgeräten, insbesondere bei programmgesteuerten Geschirrspülmaschinen, werden zur Optimierung des Spülprogrammlaufs Trübungssensoren eingesetzt. Idealerweise sendet ein insbesondere mit optischen Mitteln ausgebildeter Trübungssensor während eines Messintervalls zu einer im Gerät vorgesehenen Auswerteeinrichtung Signale für den Verfärbungsgrad bzw. für die Transparenz der Spülflüssigkeit sowie Signale für die im Messintervall in der Spülflüssigkeit sensierte Anzahl von Schmutzpartikeln. Die Auswerteeinrichtung berechnet dann aus der Verfärbung und der Anzahl der Schmutzpartikel den Trübungsgrad, der wiederum den Programmablauf des Geräts beeinflusst. In der Praxis zeigte sich jedoch, dass die Messzone des Trübungssensors auch von Luftblasen und Schaum durchquert wird. Der Trübungssensor kann aber zwischen Luftblasen und Schmutzpartikeln nicht differenzieren. Deshalb sendet der Trübungssensors der Auswerteeinrichtung fehlerhafte Signale für die Schmutzpartikelanzahl zu, so dass die Berechnung eines genauen Trübungsgrads erschwert wird. Ein vergleichbares Problem tritt bei Waschmaschinen auf, wenn sich in der Waschflotte zunehmend Schaumblasen ansammeln.

Zur Lösung dieser Probleme wurde von der Anmelderin bereits in der DE 100 59 112 C1 vorgeschlagen, die umlaufende Spülflüssigkeit innerhalb einer Messzone strömungsberuhigt zu transportieren. Dabei ist die Messzone mit dem Trübungssensor in einem waagerecht verlaufenden Leitungsweg der Spülflüssigkeit angeordnet, welcher bezogen auf die waagerechte Ebene sich nach oben hin stetig erweitert und für die Flüssigkeitsströmung eine Beruhigungsstrecke bildet. In dem strömungsberuhigten Raum können sich Luftblasen in einer Ebene oberhalb der Messzone ansammeln und mit der Strömung abtransportiert werden.

Bei dieser Lösung wurde jedoch als nachteilig erkannt, dass die Verweildauer der Spülflüssigkeit in der Beruhigungsstrecke beim Betrieb der die Spülflüssigkeit fördernden Umwälzpumpe bei vollem Volumenstrom nur sehr kurz ist, so dass Luftblasen und Schaum teilweise dennoch die Messzone durchwandern.

Um das Problem zu lösen, ist von der Anmelderin in der DE 101 46 641 A1 eine Einrichtung mit einer Hauptströmungsleitung und einer zu dieser parallel geschalteten Bypassleitung mit einem aufgeweiteten strömungsberuhigten Bereich vorgeschlagen worden, wobei in dem strömungsberuhigten Bereich die Messzone für den Trübungssensor angeordnet ist.

Hierdurch ist der vorbeschriebene Technikstand verbessert worden, jedoch hat sich in Versuchen gezeigt, dass während des Spülbetriebs gelegentlich noch Luftblasen die Messzone durchqueren.

Der Erfindung stellt sich hiervon ausgehend somit das Problem, eine Einrichtung mit einer Messzone für einen Trübungssensor in einer Bypassleitung derart weiter zu optimieren, dass die Messzone von einer blasenfreien Spülflüssigkeit mit ihren Schmutzpartikeln im Spülbetrieb durchwandert wird.

Erfindungsgemäß wird dieses Problem dadurch gelöst, dass der strömungsberuhigte Bereich durch eine wenigstens annähernd radiale Umlenkung in der Bypassleitung und eine innerhalb dieses Leitungsabschnitts auf der gegenüberliegenden Wandseite angeordnete bauchige nach unten weisende Ausformung zur Bildung eines Rückströmbereichs ausgestaltet ist, wobei die Messzone innerhalb des Rückströmbereichs in der bauchigen Ausformung angeordnet ist. Durch die Umlenkung wird ein Teil der Spülflüssigkeitsströmung in eine Kreisbahn gelenkt, so dass sich in der bauchigen nach unten weisenden Ausformung eine langsame Rückströmung ausbildet. Durch die Kreisbewegung wird erreicht, dass die Luftblasen aufgrund ihrer Dichte vor Erreichen der Messzone nach oben aufsteigen, während sich die in der Spülflüssigkeit enthaltenen Schmutzpartikel aufgrund der Gravitation mit der Rückströmung die Messzone durchqueren.

Vorteilhafte Ausgestaltungen und Weiterbildungen der Erfindung ergeben sich aus den nachfolgenden Unteransprüchen.

Die mit der Erfindung erreichbaren Vorteile bestehen neben der optimierten Luftblasenseparierung aus der Spülflüssigkeit noch vor der Messzone des Trübungssensors darin, dass die Strömungsgeschwindigkeit der Spülflüssigkeit im Bereich der Messzone derart langsam ist, dass die Spülflüssigkeit mit ihren Schmutzpartikeln die im Rückströmungsbereich angeordnete Messzone des Trübungssensors im Vergleich zum Stand der Technik nur sehr langsam durchqueren, so dass ein Trübungssensor mit einer geringen Abtastrate und ein langsamer Prozessor zur Auswertung der Trübungswerte eingesetzt werden können. Femer werden hierdurch verrauschte Trübungssignale, welche durch eine schnelle Folge von Schmutzpartikeln hervorgerufen werden, sicher vermieden.

Eine andere vorteilhafte Weiterentwicklung der erfindungsgemäßen Lehre sieht vor, dass die Bypassleitung vor dem strömungsberuhigten Bereich aufrecht verlaufend ausgerichtet ist. Hierdurch fächert sich die in den aufgeweiteten strömungsberuhigten Bereich einfließende Spülflüssigkeit weit auf, so dass der von einer Umwälzpumpe erzeugte Spülflüssigkeitsdruck sinkt und die Strömungsgeschwindigkeit der Spülflüssigkeit reduziert wird. Zur weiteren Reduzierung der Strömungsgeschwindigkeit sieht eine weitere Ausbildung der erfindungsgemäßen Lehre vor, dass der strömungsberuhigte Bereich in Hauptströmungsrichtung der Bypassleitung durch eine sprunghafte Aufweitung und eine sprunghafte Verengung in der Bypassleitung begrenzt ist.

Eine Weiterbildung der erfindungsgemäßen Lehre sieht vorteilhaft vor, dass die bauchige Ausformung in einem der Hauptströmungsleitung zugewandten Bypasswandabschnitt ausgebildet ist. Bei dieser Weiterbildung erstreckt sich der aufgeweitete strömungsberuhigte Bereich in den Raum zwischen der Bypassleitung und der Hauptströmungsleitung. Hierdurch kann die Einrichtung als kleines Bauteil mit einem geringen Platzbedarf ausgeführt werden.

Um die Bypassleitung an nahezu jeder Stelle in einer Geschirrspülmaschine oder Waschmaschine einzusetzen, sieht eine vorteilhafte Weiterbildung der erfindungsgemäßen Lehre vor, dass die Einrichtung als flaches Bauteil ausgebildet ist. Hierdurch lässt sich die Einrichtung bei einer Geschirrspülmaschine mit einer Gehäuseseitenwand und einem Spülbehälter selbst in dem engen Spalt zwischen einer Gehäusewand und dem Spülbehälter anordnen. Demgemäß sieht eine weitere vorteilhafte Ausführung der Erfindung vor, die Einrichtung mit ihrer Hauptströmungsleitung vertikal im Strömungsweg einer von einer Umwälzpumpe gespeisten Sprüharmleitung anzuordnen und auszurichten. Durch diese Anordnung ist die Einrichtung insbesondere gegenüber der standardmäßigen Anordnung im vollgepackten Sockelbereich gut zugänglich, so dass sie schnell und kostengünstig montiert sowie im Servicefall ausgetauscht werden kann. Um die Austauschbarkeit der Einheit noch zu verbessern, sieht eine Weiterbildung der Erfindung vor, dass die zwischen der Gehäuseseitenwand und dem Spülbehälter angeordnete Einrichtung auswechselbar also lösbar mit der Sprüharmleitung verbunden ist. Eine Alternative hierzu ergibt sich dadurch, dass die Einrichtung und die Sprüharmleitung einstückig ausgebildet ist. Hierdurch entfallen insbesondere die Kosten für die teure Montage der Einrichtung.

Nach einer weiteren vorteilhaften Entwicklung der erfindungsgemäßen Lehre ist vorgesehen, dass die Hauptströmungsleitung mindestens 40cm oberhalb der Umwälzpumpe angeordnet ist. In dieser Höhe sind die von der Umwälzpumpe erzeugten Drallkomponenten bereits stark reduziert worden.

Eine zweckmäßige Weiterentwicklung der Erfindung sieht vor, dass die Umlenkung in der Hauptströmungsrichtung der Bypassleitung in den zurückmündenden ersten Leitungsabschnitt führt.

Eine vorteilhafte Weiterentwicklung der erfindungsgemäßen Lehre sieht vor, dass die sprunghafte Aufweitung zu einer waagerechten Ebene und in Richtung der Rückströmung geringfügig, vorzugsweise mit einem Neigungswinkel zwischen 10° und 20°, geneigt ist. Da beim Abschalten der Umwälzpumpe sich eine Rückströmung in der Bypassleitung aufgrund der Gravitationskraft ausbildet, wird durch die vorgenannte Weiterbildung der Vorteil erreicht, dass sich in der Bypassleitung angesammelte Schmutzpartikel sicher mit der Rückströmung aus der Bypassleitung in die Hauptströmungsleitung gespült werden. Aus dieser werden sie beim nächsten Spülbetrieb mit dem vollem von der Umwälzpumpe erzeugten Spüldruck in den Spülbehälter transportiert. Somit wird auch bei längerem Stillstand des Geräts eine Anhaftung von Schmutzpartikeln in der Bypassleitung vermieden. Aus den genannten Gründen sieht eine andere Weiterentwicklung der erfindungsgemäßen Lehre vor, dass der erste Leitungsabschnitt und der zweite Leitungsabschnitt zu einer waagerechten Ebene entgegen der Hauptströmungsrichtung der Bypassleitung geringfügig, vorzugsweise mit einem Neigungswinkel zwischen 10° und 20°, geneigt sind.

Ein Ausführungsbeispiel der Erfindung ist in den Zeichnungen rein schematisch dargestellt und wird nachfolgend näher beschrieben. Es zeigt
- Figur 1: eine programmgesteuerte Geschirrspülmaschine im Querschnitt mit der vereinfachten Darstellung ihrer Bauelemente und ihrem Zubehör, wobei für die Feststellung des Trübungsgrades der Spülflüssigkeit eine Einrichtung mit einer Messzone für einen Trübungssensor im Wasserlauf des Gerätes vorgesehen ist,
- Figur 2: die Einrichtung in vergrößerter Darstellung im Längsschnitt und
- Figur 3: die Einrichtung aus Figur 2 in perspektivischer Ansicht.

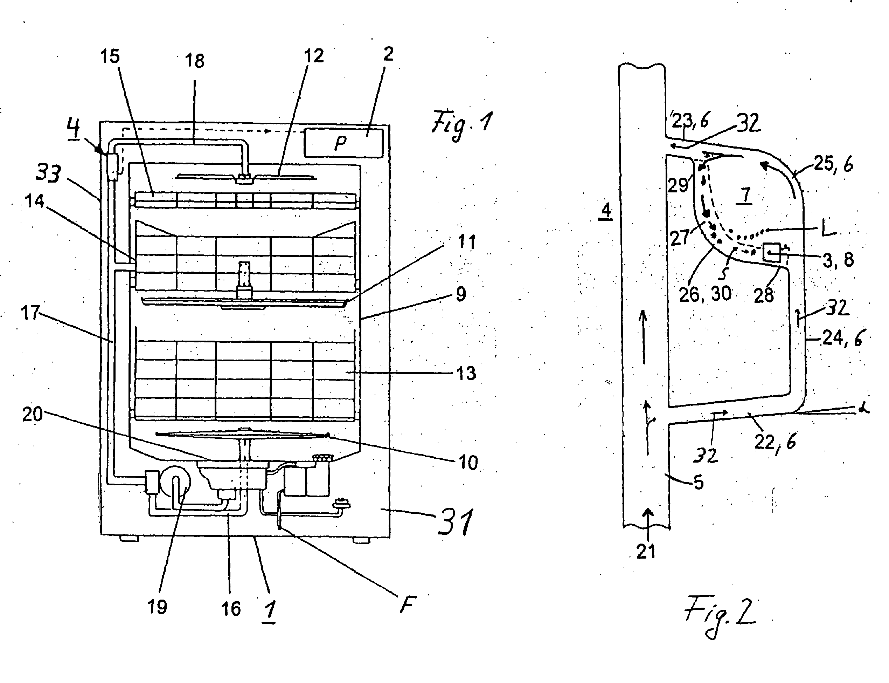

Die Erfindung geht aus von einer elektronisch programmgesteuerten Geschirrspülmaschine (1), deren manuell oder automatisch anwählbare Spülprogramme jeweils separate Programmabschnitte, wie Vorspülen, Reinigen, Zwischenspülen und Klarspülen aufweisen, wobei je nach festgestelltem Verschmutzungsgrad des geladenen Geschirrs bzw. der Spülflüssigkeit die Vorspül- und/oder Zwischenspülgänge aus- oder zusätzlich eingesteuert werden können. Nach dem letzten Programmabschnitt Klarspülen schließt sich in der Regel ein Programmabschnitt Trocknen an. Solche Geschirrspülmaschinen (1) sind Stand der Technik und weisen im Wesentlichen Bauelemente und Zubehör auf, wie dies in Fig. 1 bei dem gezeigten Haushaltgerät vereinfacht dargestellt ist. Auf die konkrete Darstellung der nur beispielhaft gezeigten Programmsteuerung (2) des Gerätes ist der besseren Übersicht halber verzichtet worden. Eine so konzipierte Geschirrspülmaschine kann zur Optimierung des Spülprogrammlaufes mit einem Trübungssensor (3) ausgestattet werden, welcher die Spülwassertrübungen in den wasserführenden Programmschritten sensiert. Dabei ist es wichtig, dass in der Spülflüssigkeit mittransportierte Luftblasen oder Schaumanteile das Messergebnis nicht verfälschen. Deswegen ist, wie nachfolgend noch näher beschrieben, eine Einrichtung (4) mit einer Hauptströmungsleitung (5) und einer daran angeschlossenen als Blasenabscheider ausgebildeten Bypassleitung (6) mit einem strömungsberuhigten Bereich (7) für die Messzone (8) des Trübungssensors (3) vorgesehen.

Die frontseitig zu beladende Geschirrspülmaschine (1) besitzt einen Spülbehälter (9) und mehrere Sprüharme (10, 11, 12), die über und zwischen Geschirrkörben (13, 14) und einem separaten Besteckkorb (15) in unterschiedlichen Spülebenen im Spülbehälter (9) angeordnet sind. Die Sprüharme (10 bis 12) werden über zugeordnete Sprüharmleitungen (16 bis 18) von der umlaufenden Spülflüssigkeit (21) einer vorgeschalteten und im Sockelbereich angeordneten Umwälzpumpe (19) gespeist, wobei die Sprüharmleitung (17) gemäß dem vorliegenden Ausführungsbeispiel sowohl den mittleren als auch den oberen Sprüharm (7 bzw. 8) versorgt. Im Spülbetrieb wird die sich im Bodenbereich des Spülbehälters (9) sammelnde Spülflüssigkeit (21), sh. Fig. 2, ständig über eine aus einem Feinstsieb und einem Grobsieb bestehende Filtersiebkombination (20) zur Filterung von Speiseresten umgewälzt und über die der Umwälzpumpe (19) nachgeschalteten Sprüharmleitungen (16 bis 18) zu den Sprüharmen (10 bis 12) geführt. Mit (F) ist ein Anschluss für das dem Gerät zuzuführende Frischwasser bezeichnet.

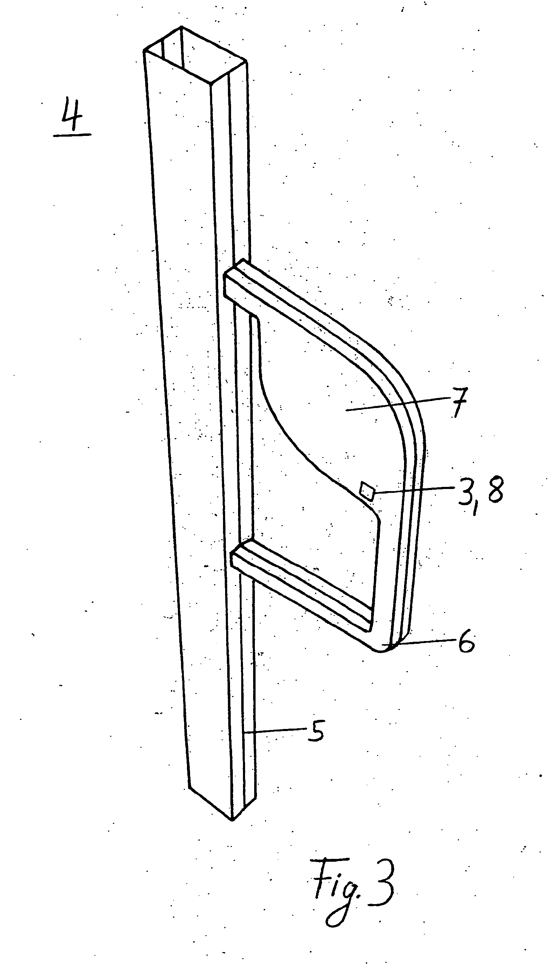

Die in Fig. 2 näher gezeigte erfindungsgemäße und gemäß Fig. 3 flach ausgeführte Einrichtung (4) ist mit ihrer Hauptströmungsleitung (5) im vertikalen Strömungsweg der Sprüharmleitung (17) angeordnet, so dass bei Spülbetrieb die Hauptströmungsleitung (5) von unten nach oben von der Spülflüssigkeit (21) durchströmt wird. Um die von der Umwälzpumpe (19) erzeugten Wirbel und Drallkomponenten zu reduzieren, ist die Einrichtung (4) in einem Sprüharmleitungsabschnitt der Sprüharmleitung (17) weit oberhalb der Umwälzpumpe (19), vorzugsweise 50cm oberhalb der Umwälzpumpe (19) in Höhe des oberen Sprüharms (12) zwischen einer Gehäuseseitenwand (33) und dem Spülbehälter (9) angeordnet.

An die vertikal verlegte Hauptströmungsleitung (5) der Einrichtung (4) ist gemäß Figur 2 u. 3 die Bypassleitung (6) angeschlossen, welche einen von der Hauptströmungsleitung (5) abzweigenden Leitungsabschnitt (22), einen in die Hauptströmungsleitung (5) zurückmündenden Leitungsabschnitt (23) und einen strömungsberuhigten Bereich (7) für die Messzone (8) des Trübungssensors (2) aufweist. Nach der Ausführung gemäß Fig. 2 und 3 besitzt die Bypassleitung (6) im Längsschnitt einen näherungsweise u-förmigen Verlauf mit einem mittleren Leitungsabschnitt (24).

Grundsätzlich ist aber der mittlere Leitungsabschnitt (24) für die erfindungsgemäße Bypassleitung (6) nicht zwingend notwendig.

Der strömungsberuhigte Bereich (7) ist durch eine wenigstens annähernd radiale (kreisförmige) Umlenkung (25) in der Bypassleitung (6) und eine innerhalb dieses Leitungsabschnitts (22, 23) auf der gegenüberliegenden Wandseite (30) angeordnete bauchige nach unten zum Sockelbereich weisende Ausformung (26) zur Bildung eines in Fig. 2 gestrichelt skizzierten Rückströmbereichs (27) ausgestaltet. Demgemäß ist für die Rückströmung also sowohl die radiale Umlenkung (25) als auch die bauchförmige Ausformung (26) verantwortlich, wobei die radial geführte Umlenkung (25) gemäß Fig. 2 vorzugsweise zwischen den Leitungsabschnitten (23, 24) angeordnet ist.

Innerhalb des Rückströmbereichs (27) ist die Messzone (8) für den Trübungssensor (3) vorgesehen, da die Spülflüssigkeit (21) einerseits hier die für die Trübungsmessung charakteristischen Schmutzpartikel (S) enthält, andererseits aber, insbesondere am Ende des Rückstromwegs, frei von denen zu Verfälschungen von Trübungsmessungen führenden Luftblasen (L) ist. Zur optimalen unten noch näher beschriebenen Ausbildung des Rückströmbereichs (27) ist der strömungsberuhigte Bereich (7) durch eine sprunghafte Aufweitung (28) und eine sprunghafte Verengung (29) begrenzt.

Wie die Figuren 2 und 3 zeigen, ist zur Ausbildung der bauchigen Ausformung (26) ein der Hauptströmungsleitung (5) zugewandter Bypasswandabschnitt (30) ausgeformt worden. Dieser zweigt in die durch Pfeile angedeutete Hauptströmungsrichtung (32) der Bypassleitung (6) noch vor der Umlenkung (25) in Richtung der Hauptströmungsleitung (5) ab, und schließt über einen kreisförmigen Abschnitt und einen näherungsweise senkrecht nach oben weisenden Abschnitt an einen Wandabschnitt des näherungsweise waagerecht verlaufenden Leitungsabschnitt (23) an. Dabei bildet die Abzweigung des Bypasswandabschnitts (30) die Aufweitung (28) und der senkrecht nach oben geführte und annähernd lotrecht zum Leitungsabschnitt (23) stehende Teil des Wandabschnitts (30) die den strömungsberuhigten Bereich (7) begrenzende Verengung (29).

Die vorbeschriebene Ausbildung des aufgeweiteten strömungsberuhigten Bereichs (7) bewirkt, dass sich der in Fig. 2 skizzierte Rückströmbereich (27), wie nachfolgend beschrieben, innerhalb des strömungsberuhigten Bereichs (7) ausbildet.

Beim Einströmen der Spülflüssigkeit (21) in den aufgeweiteten strömungsberuhigten Bereich (7) reduziert sich der von der Umwälzpumpe (19) erzeugte Spülflüssigkeitsdruck und die Strömungsgeschwindigkeit. Dabei wird der auf der Seite der Aufweitung (28) fließende Strömungsanteil der Spülflüssigkeit (21) durch die sprunghafte und einseitig ausgeprägte Aufweitung (28) innerhalb des strömungsberuhigten Bereichs (7) aufgefächert (nicht dargestellt). Der auf der Seite der Umlenkung (25) fließende Strömungsanteil der Spülflüssigkeit (21) strömt entlang der radial geführten Umlenkung (25) in Richtung der Verengung (29) der Bypassleitung (6), wobei die radial geführte Umlenkung (25) den Volumenstrom eine Drallkomponente und eine kreisförmige zur Aufweitung (28) gerichtete und mit Pfeilen in Fig. 2 skizzierte Bewegungsbahn aufzwingt. Aufgrund dieser Kreisbahn bildet sich an der Verengung (29) der Bypassleitung (6) eine Rückströmung in Richtung der Aufweitung (28), welche sich im Wesentlichen entlang des Bypasswandabschnitts (30) mit sehr langsamer Strömungsgeschwindigkeit bewegt. Dabei wird durch die langsame Rückströmgeschwindigkeit und durch den kreisförmigen Abschnitt des Bypasswandabschnitts (30) zwischen der Aufweitung (28) und der Verengung (29) erreicht, dass noch in dem Volumenstrom der Spülflüssigkeit (21) enthaltene Luftbläschen (L), wie Fig. 2 zeigt, definiert nach oben aufsteigen, wobei sich in der Spülflüssigkeit (21) mitgeführte Schmutzpartikel (S) aufgrund ihrer Gravitationskraft mit der Rückströmung entlang der Bypasswand (30) bewegen. Deshalb ist zur Messung der Schmutzpartikel (S) sowie der Trübung einer blasenfreien Spülflüssigkeit (21) die Messzone (8) im Rückströmbereich (27) nahe des Bypasswandabschnitts (30) angeordnet. Dabei ist die Messzone (8) für den Trübungssensor (3) am durch die Aufweitung (28) begrenzten Ende des Rückströmbereichs (27) angeordnet, da mit zunehmender Rückströmlänge naturgemäß immer mehr Luftblasen (L) entweichen.

Im Ausführungsbeispiel gemäß Fig. 2 und 3 ist vorgesehen, dass die Aufweitung (28) geringfügig gegenüber der waagerechten Ebene in Richtung der Rückströmung und die Leitungsabschnitte (22, 23) geringfügig zur waagerechten Ebene entgegen der Hauptströmungsrichtung (32) geneigt sind, damit die aus der Spülflüssigkeit (21) in die Bypassleitung (6) mitgeführten Schmutzpartikel (S) beim Abschalten der Umwälzpumpe mit der sich aufgrund der Gravitation in der gesamten Bypassleitung einstellenden Rückströmung sicher in die Hauptströmungsleitung (5) gefördert werden. Aus der Hauptströmungsleitung (5) werden die Partikel (S) größtenteils bei Spülbetrieb mit der Spülflüssigkeit (21) in den Spülraum transportiert, von wo aus sie mit der Spülflüssigkeit (21) in an sich bekannter Weise über eine Ablaufpumpe in einen Abfluss transportiert werden. Besonders gute Ergebnisse zeigten sich bei einem Neigungswinkel α der vorgenannten Bypasswände (22, 23, 28) von 10° bis 20° gegenüber der waagerechten Ebene (s. Fig. 2).

## Patentansprüche

1. Einrichtung (4) zur Verhinderung einer Schaum- oder Luftblasenansammlung in der Messzone (8) eines im Spülwasserkreislauf einer Geschirrspülmaschine (1) oder Waschmaschine angeordneten Trübungssensors (3), mit einer Hauptströmungsleitung (5) und einer daran angeschlossenen Bypassleitung (6), welche einen von der Hauptströmungsleitung (5) abzweigenden ersten Leitungsabschnitt (22), einen in die Hauptströmungsleitung (5) zurückmündenden zweiten Leitungsabschnitt (23) und einen aufgeweiteten strömungsberuhigten Bereich (7) vor der Einmündung als Messzone (8) für den Trübungssensor aufweist,
**dadurch gekennzeichnet,**
**dass** der strömungsberuhigte Bereich (7) durch eine wenigstens annähernd radiale Umlenkung (25) in der Bypassleitung (6) und eine innerhalb dieses Leitungsabschnitts auf der gegenüberliegenden Wandseite angeordnete bauchige nach unten weisende Ausformung (26) zur Bildung eines Rückströmbereichs (27) ausgestaltet ist, wobei die Messzone (8) innerhalb des Rückströmbereichs (27) in der bauchigen Ausformung (26) angeordnet ist.

2. Einrichtung (4) nach Anspruch 1
**dadurch gekennzeichnet,**
**dass** die Bypassleitung (6) vor dem strömungsberuhigten Bereich (7) aufrecht verlaufend ausgerichtet ist.

3. Einrichtung (4) nach mindestens einem der Ansprüche 1 bis 2,
**dadurch gekennzeichnet,**
**dass** der strömungsberuhigte Bereich (7) in Hauptströmungsrichtung der Bypassleitung (6) durch eine sprunghafte Aufweitung (28) und eine sprunghafte Verengung (29) in der Bypassleitung (6) begrenzt ist.

4. Einrichtung (4) nach mindestens einem der Ansprüche 1 bis 3,
**dadurch gekennzeichnet,**
**dass** die bauchige Ausformung (26) in einem der Hauptströmungsleitung (5) zugewandten Bypasswandabschnitt (30) ausgebildet ist.

5. Einrichtung (4) nach mindestens einem der Ansprüche 1 bis 4,
**dadurch gekennzeichnet,**
**dass** die Umlenkung (25) in Hauptströmungsrichtung der Bypassleitung (6) in den zurückmündenden ersten Leitungsabschnitt (23) führt.

6. Einrichtung (4) nach mindestens einem der Ansprüche 3 bis 5,
**dadurch gekennzeichnet,**
**dass** die sprunghafte Aufweitung (28) zu einer waagerechten Ebene und in Richtung der Rückströmung geringfügig, vorzugsweise mit einem Neigungswinkel zwischen 10° und 20°, geneigt sind.

7. Einrichtung (4) nach mindestens einem der Ansprüche 1 bis 6,
**dadurch gekennzeichnet,**
**dass** der erste Leitungsabschnitt (22) und der zweite Leitungsabschnitt (23) zu einer waagerechten Ebene entgegen der Hauptströmungsrichtung (5) der Bypassleitung (6) geringfügig, vorzugsweise mit einem Neigungswinkel zwischen 10° und 20°, geneigt ist.

8. Einrichtung (4) nach mindestens einem der Ansprüche 1 bis 7,
**dadurch gekennzeichnet,**
**dass** die Einrichtung (4) als flaches Bauteil ausgebildet ist.

9. Einrichtung (4) nach mindestens einem der Ansprüche 1 bis 8,
**dadurch gekennzeichnet,**
**dass** die Bypassleitung (6) einen zwischen dem ersten Leitungsabschnitt (22) und dem zweiten Leitungsabschnitt (23) angeordneten mittleren Leitungsabschnitt (24) aufweist und im Längsschnitt näherungsweise u-förmig ausgebildet ist.

10. Einrichtung (4) nach mindestens einem der Ansprüche 1 bis 9,
**dadurch gekennzeichnet,**
**dass** die Hauptströmungsleitung (5) der Einrichtung (4) vertikal im Strömungsweg einer von einer Umwälzpumpe (19) gespeisten Sprüharmleitung (17) angeordnet und ausgerichtet ist.

11. Einrichtung (4) für eine Geschirrspülmaschine nach Anspruch 10,
mit einem von Gehäuseseitenwänden umgebenen Spülbehälter (9) zum Reinigen von Geschirr,
**dadurch gekennzeichnet,**
**dass** die Hauptströmungsleitung (5) zwischen einer Gehäuseseitenwand (33) und dem Spülbehälter (9) auswechselbar angeordnet oder mit der Sprüharmleitung einstückig ausgebildet ist.

12. Einrichtung (4) nach Anspruch 11,
**dadurch gekennzeichnet,**
**dass** die Hauptströmungsleitung (5) mindestens 40cm oberhalb der Umwälzpumpe (19) angeordnet ist.

## Claims

1. Device (4) for preventing a collection of foam or air bubbles in the measuring area (8) of a turbidity sensor (3) that is disposed in the washing water circuit of a dishwasher (1) or washing machine, the said device having a main flow line (5) and a bypass line (6), which is connected to the said main flow line and includes a first line portion (22) that branches off from the main flow line (5), a second line portion (23) that opens back out into the main flow line (5) and a broadened region (7) with a reduced flow velocity upstream of the mouth as the measuring area (8) for the turbidity sensor, **characterised in that** the region (7) with a reduced flow velocity is developed by means of an at least approximately radial deflection (25) in the bypass line (6) and a downward facing bulbous protuberance (26) that is disposed within the said line portion on the oppositely situated side of the wall for forming a return flow region (27), wherein the measuring area (8) is disposed inside the return flow region (27) in the bulbous protuberance (26),

2. Device (4) according to claim 1, **characterised in that** the bypass line (6) extends upright upstream of the region (7) with a reduced flow velocity.

3. Device (4) according to at least one of claims 1 to 2, **characterised in that** the region (7) with a reduced flow velocity is defined in the main flow direction of the bypass line (6) by an abrupt broadening (28) and an abrupt narrowing (29) in the bypass line (6).

4. Device (4) according to at least one of claims 1 to 3, **characterised in that** the bulbous protuberance (26) is formed in a bypass wall portion (30) facing the main flow line (5).

5. Device (4) according to at least one of claims 1 to 4, **characterised in that** the deflection (25), in the main flow direction of the bypass line (6), leads into the first line portion (23) that opens back out.

6. Device (4) according to at least one of claims 3 to 5, **characterised in that** the abrupt broadening (28), with respect to a horizontal plane and in the direction of the return flow, is slightly inclined, preferably at an angle of inclination between 10° and 20°.

7. Device (4) according to at least one of claims 1 to 6, **characterised in that** the first line portion (22) and the second line portion (23), with respect to a horizontal plane in opposition to the main flow direction (5) of the bypass line (6), are slightly inclined, preferably at an angle of inclination between 10° and 20°.

8. Device (4) according to at least one of claims 1 to 7, **characterised in that** the device (4) is in the form of a flat component.

9. Device (4) according to at least one of claims 1 to 8, **characterised in that** the bypass line (6) includes a central line portion (24) that is disposed between the first line portion (22) and the second line portion (23) and in longitudinal section is approximately U-shaped.

10. Device (4) according to at least one of claims 1 to 9, **characterised in that** the main flow line (5) of the device (4) is disposed and orientated in a vertical manner in the flow path of a spray arm line (17) that is supplied by a circulating pump (19).

11. Device (4) for a dishwasher according to claim 10, the said dishwasher including a washing chamber (9) for cleaning the dishes that is surrounded by housing side walls, **characterised in that** the main flow line (5) is disposed so as to be replaceable between one housing side wall (33) and the washing chamber (9) or is formed in one piece with the spray arm line.

12. Device (4) according to claim 11, **characterised in that** the main flow line (5) is disposed at least 40 cm above the circulating pump (19).

## Revendications

1. Dispositif (4) destiné à empêcher une accumulation de mousse ou de bulles d'air dans la zone de mesure (8) d'un capteur de turbidité (3) disposé dans le circuit d'eau de lavage d'un lave-vaisselle (1) ou d'une machine à laver, avec une conduite d'écoulement principale (5) et une conduite de dérivation (6) raccordée à celle-ci, laquelle présente une première portion de conduite (22) partant en dérivation de la conduite d'écoulement principale (5), une deuxième portion de conduite (23) redébouchant dans la conduite d'écoulement principale (5) et une zone élargie à écoulement stabilisé (7) avant le débouché, servant de zone de mesure (8) pour le capteur de turbidité (3),
**caractérisé en ce**
**que** la zone à écoulement stabilisé (7) est réalisée par une déviation (25) au moins approximativement radiale dans la conduite de dérivation (6) et une formation ventrue (26) dirigée vers le bas, disposée du côté de la paroi opposée à l'intérieur de cette portion de conduite, pour former une zone de retour de courant (27), la zone de mesure (8) étant disposée à l'intérieur de la zone de retour de courant (27) dans la formation ventrue (26).

2. Dispositif (4) selon la revendication 1,
**caractérisé en ce**
**que** la conduite de dérivation (6) est orientée de manière à s'étendre verticalement avant la zone à écoulement stabilisé (7).

3. Dispositif (4) selon au moins l'une des revendications 1 à 2,
**caractérisé en ce**
**que** la zone à écoulement stabilisé (7) est limitée en direction d'écoulement principale de la conduite de dérivation (6) par un brusque élargissement (28) et un brusque rétrécissement (29) dans la conduite de dérivation (6).

4. Dispositif (4) selon au moins l'une des revendications 1 à 3,
**caractérisé en ce**
**que** la formation ventrue (26) est réalisée dans une portion de paroi de dérivation (30) tournée vers la conduite d'écoulement principale (5).

5. Dispositif (4) selon au moins l'une des revendications 1 à 4,
**caractérisé en ce**
**que** la déviation (25) conduit dans la première portion de conduite (23) redébouchante en direction d'écoulement principale de la conduite de dérivation (6).

6. Dispositif (4) selon au moins l'une des revendications 3 à 5,
**caractérisé en ce**
**que** le brusque élargissement (28) est légèrement incliné, de préférence avec un angle d'inclinaison compris entre 10° et 20°, par rapport à un plan horizontal et en direction du courant de retour.

7. Dispositif (4) selon au moins l'une des revendications 1 à 6,
**caractérisé en ce**
**que** la première portion de conduite (22) et la deuxième portion de conduite (23) sont légèrement inclinées, de préférence avec un angle d'inclinaison compris entre 10° et 20°, par rapport à un plan horizontal à l'encontre de la direction d'écoulement principale (5) de la conduite de dérivation (6).

8. Dispositif (4) selon au moins l'une des revendications 1 à 7,
**caractérisé en ce**
**que** le dispositif (4) est réalisé sous la forme d'un élément plat.

9. Dispositif (4) selon au moins l'une des revendications 1 à 8,
**caractérisé en ce**
**que** la conduite de dérivation (6) présente une portion de conduite centrale (24) disposée entre la première portion de conduite (22) et la deuxième portion de conduite (23) et est réalisée approximativement en forme de U en coupe longitudinale.

10. Dispositif (4) selon au moins l'une des revendications 1 à 9,
**caractérisé en ce**
**que** la conduite d'écoulement principale (5) du dispositif (4) est disposée et orientée verticalement dans le chemin d'écoulement d'une conduite de bras d'aspersion (17) alimentée par une pompe de circulation (19).

11. Dispositif (4) pour un lave-vaisselle selon la revendication 10,
avec une cuve de lavage (9) entourée de parois latérales de carter et destinée à laver de la vaisselle,
**caractérisé en ce**
**que** la conduite d'écoulement principale (5) est disposée de manière échangeable entre une paroi latérale de carter (33) et la cuve de lavage (9) ou réalisée d'une seule pièce avec la conduite de bras d'aspersion.

12. Dispositif (4) selon la revendication 11,
**caractérisé en ce**
**que** la conduite d'écoulement principale (5) est disposée à au moins 40 cm au-dessus de la pompe de circulation (19).
